# EUROPÄISCHE PATENTANMELDUNG

(11) **EP 0 799 677 A2**
(43) Veröffentlichungstag der Anmeldung: **08.10.1997**
(21) Anmeldenummer: 97103086.1
(22) Anmeldetag: 26.02.1997
(51) Int. Cl.: B27B 5/16

(54) **Vorrichtung zur Aufnahme eines motorgetriebenen Werkzeuges, insbesondere eines Handkreissäge**

(30) Priorität: 01.03.1996 DE 29603774 U
(71) Anmelder: wolfcraft GmbH, D-56746 Kempenich (DE)
(72) Erfinder: Noniewicz, Zbigniew, 56746 Kempenich (DE)
(74) Vertreter: Grundmann, Dirk, Dr.

(57) **Zusammenfassung**

Die Erfindung betrifft eine Vorrichtung zur Aufnahme eines motorgetriebenen Werkzeuges (6), insbesondere einer elektrisch angetriebenen Säge, beispielsweise Kreissäge, mit einer einseitig eine Werkzeugaufnahme für das Werkzeug aufweisenden Aufnahmeplatte (3) und einer Auflageplatte (4) für das Werkstück, wobei die Aufnahmeplatte (3) mit der weg von der Auflageplatte weisenden Werkzeugaufnahme in einer Ebene beabstandet, parallel und oberhalb zur Auflagenebene mittels Gleitern (18,118,118') an Führungsschienen (5) linearverschieblich geführt ist und um eine in der Verschiebebene liegenden Schwenkachse um 180° umwendbar ist. Um die Umstellung von einer Betriebsart in die andere zu vereinfachen und gleichzeitig den Gebrauchswert der Vorrichtung in der Plattensägen-Betriebsstellung zu erhöhen, ist vorgesehen, daß der Verschiebeweg (W), die Länge (1) der Aufnahmeplatte (3) und die Länge (L) der Auflageplatte (4) derart aufeinander abgestimmt sind, daß die Aufnahmeplatte durch eine Linearverlagerung zumindest teilweise aus der Überlappungslage zur Auflageplatte (4) bringbar ist und daß sie dort mit montiertem Werkzeug (6) umwendbar und umgewendet feststellbar ist, wobei das Motorgehäuse (6) in Nebeneinanderlage zur Auflageplatte (4) liegt.

## Beschreibung

Die Erfindung betrifft eine Vorrichtung gemäß Gattungsbegriff des Anspruches 1.

Eine derartige Vorrichtung ist aus US-PS 45 02 518 als Sägetisch bekannt. Bei der bekannten Vorrichtung ist eine Platte vorgesehen, welche in der Horizontalen liegt und welche um eine in der Horizontalen liegenden Achse umwendbar ist. Die Platte dient zur Aufnahme eines Werkzeuges, insbesondere einer Handkreissäge. Einseitig ist die Platte mit Befestigungsmitteln ausgestattet, mittels welcher die Handkreissäge an der Werkzeugaufnahmeplatte befestigt werden kann. Die Platte weist eine öffnung auf, durch welche das Werkzeug, bei dem vorbekannten Sägetisch ein Kreissägeblatt auf die gegenüberliegende Plattenseite ragen kann.
Unterhalb der Aufnahmeplatte für das Werkzeug ist eine Auflageplatte für das Werkstück vorgesehen. Durch eine Linearverschiebbarkeit der Aufnahmeplatte zwischen zwei oberhalb der Auflageplatte angeordneten Führungsschienen kann das Werkzeug in Schnittrichtung über die Auflageplatte geschoben werden. Ein Teilbereich des Kreissägeblattes ragt dabei in einen Schlitz der Platte ein, so daß auf der Auflageplatte aufliegende Werkstücke durch Verlagern der Aufnahmeplatte mit nach unten ausragendem Werkzeug gesägt werden können. Die Platte kann so umgewendet werden, so daß das Kreissägeblatt nach oben aus der Aufnahmeplatte herausragt. Hierzu muß die Auflageplatte entfernt werden. Beim Stand der Technik dient die von oben auf die Aufnahmeplattte aufgesetzte Auflageplatte zur Fixierung der Aufnahmeplatte in der umgewendeten Stellung.

Diese vorbekannte Vorrichtung ist zwar in der Lage, einerseits die Aufgabe einer sogenannten Plattensäge zu erfüllen und andererseits die Aufgabe eines stationären Sägetisches. Allerdings erfordert die Umstellung eine Demontage der Vorrichtung.

Ferner sind im Stand der Technik sogenannte Plattensägen bekannt, bei welchen eine Säge auf einer Führung linear verlagerbar ist. Die Verlagerbarkeit ist dabei in Schnittrichtung möglich, so daß ein feststehendes Werkstück, welches auf einer unterhalb der Säge angeordnet in Werkstückaufnahmeplatte liegt, geschnitten werden kann.

Der Erfindung liegt die Aufgabe zugrunde, eine gattungsgemäße Vorrichtung dahingehend weiterzubilden, daß die Umstellung von einer Betriebsart in die andere vereinfacht ist und gleichzeitig der Gebrauchswert der Vorrichtung in der Plattensägen-Betriebsstellung erhöht ist.

Gelöst ist die Aufgabe durch die in den Ansprüchen angegebene Erfindung.

Zufolge der erfindungsgemäßen Lösung ist lediglich eine Verlagerung der Aufnahmeplatte in eine bestimmte Verlagerungsstellung nötig, in welcher die Überlappungslage zur Auflageplatte aufgehoben ist In dieser Stellung kann die Aufnahmeplatte umgewendet werden, ohne daß das dann nach unten weisende Motorgehäuse der Kreissäge oder dergleichen gegen die Auflageplatte stoßen würde In dieser umgewendeten Stellung ist die Aufnahmeplatte feststellbar. Die Feststellmittel sind vorzugsweise den Gleitern zugeordnet. Diese Ausgestaltung bietet ferner den Vorteil, daß die zu schneidenden Werkstücke nicht kürzer zu sein brauchen als die Länge der Auflageplatte. In der Umwendstellung liegt die Aufnahmeplatte nur in einer Teilüberlappungsstellung zur Auflageplatte, so daß das Sägeblatt bzw. das Motorgehäuse neben der Auflageplatte zum Liegen kommt. Die Schnittrichtung liegt bevorzugt aus dieser Nebeneinanderstellung in Richtung zur Auflageplatte, so daß ein bis an den Rand der Auflageplatte ragendes Werkstück geschnitten werden kann. Es kann zumindest einseitig die Auflageplatte bis zum Randbereich ausgenutzt werden. Da gemäß einer bevorzugten Ausgestaltung die Auflageplatte in Verschieberichtung der Aufnahmeplatte verschiebbar und feststellbar ist, kann die Auflageplatte auch in eine solche Stellung gebracht werden, daß die Schnittlänge sich über die gesamte Auflagenplatten-Länge erstreckt. Eine bevorzugte Ausgestaltung der Erfindung weist eine Werkstückauflageplatte auf, welche quer zur Verlagerungsrichtung der Aufnahmeplatte aus einer von der Aufnahmeplatte überfahrbaren ersten Stellung in eine zur Aufnahmeplatte fluchtenden zweiten Stellung verlagerbar ist. Die Vorrichtung kann in einer ersten Betriebsstellung als stationäre Kreissäge verwendet werden; in dieser Verwendungsart ist die Werkstückauflageplatte fluchtend zur Werkzeugaufnahmeplatte angeordnet und die Werkzeugaufnahmeplatte ist in einer Schwenkstellung, in welcher das Werkzeug, insbesondere das Kreissägeblatt aus der fluchtenden Ebene nach oben herausragt. In der zweiten Betriebsstellung, in welcher die Werkstückauflageplatte quer insbesondere nach unten verlagert ist, ist die Werkzeugaufnahmeplatte linear verlagerbar derart, daß sie die Werkstückauflageplatte überfahren kann. In dieser Betriebsstellung kann die Vorrichtung als Plattensäge benutzt werden. Die Werkzeugaufnahmeplatte ist in dieser Betriebart in einer Schwenkstellung, in welcher die Kreissäge in den Zwischenraum zwischen Werkzeugaufnahmeplatte und Werkstückauflageplatte, also insbesondere nach unten ragt, so daß ein auf der Werkstückauflageplatte aufliegendes Werkstück, beispielsweise eine Holzplatte in ruhender Stellung zersägt werden kann, während in der anderen, ersten Betriebsstellung das Werkstück gegen die feststehende Säge verlagert werden kann. Eine bevorzugte Weiterbildung der Erfindung sieht vor, daß die Verlagerungsrichtung der Werkzeugaufnahmeplatte in Richtung Parallel zur Schwenkachse liegt. Dies hat den Vorteil, daß bei einer Umschwenkung der Aufnahnmeplatte die Schnittrichtung der Säge beibehalten wird. Eine weitere Weiterbildung sieht vor, daß die Aufnahmeplatte zwischen zwei runden Führungsstangen an Gleitern gelagert ist. Es kann ferner vorgesehen sein, daß die Werkstückauflageplatte in der ersten Stellung unter Ausbildung eines Höhenfreiraumes unter den Führungsschienen liegt. Dann können auch breite Platten zersägt werden, deren Breite größer ist als der Abstand der beiden Führungsstangen. In der zweiten Stellung soll die Oberfläche der Auflageplatte, welche zur Oberfläche der Aufnahmeplatte fluchtet oberhalb der Führungsschienen angeordnet sein. Hierdurch ist gewährleistet, daß auch in dieser Betriebsstellung, in welcher die Säge fest ist und das Werkstück verlagert wird, breite Platten oder Bretter zersägt werden können. Die Vorrichtung steht bevorzugt auf vier Beinen. Dabei kann die Vorrichtung einen Rahmen aufweisen.
Der Rahmen ist bevorzugt so gefertigt, daß die beiden Platten in Horizontallage liegen. Die Werkzeugauflageplatte besitzt bevorzugt seitlich nach rückwärts, insbesondere nach unten ausladende Wangen, mit welchen die Auflageplatte höhenverstellbar am Rahmen befestigt ist.
Hierzu können die Wangen Schlitze aufweisen, die mit am Rahmen angeordneten Zapfen zusammenwirken. Hierdurch kann die Auflageplatte in unterschiedlichen Raststellungen höhenverlagert werden. Ferner kann vorgesehen sein, daß die Werkstückauflageplatte Befestigungsschlitze aufweist, für Werkstückklemmen oder dergleichen. Die Schlitze können auch als Nuten ausgebildet sein Ferner ist bevorzugt, daß die Nuten eine Schwalbenschwanzform aufweisen. Es kann ferner ein Winkelanschlag vorgesehen sein, der um eine Achse schwenkbar ist, welche fluchtend liegt zur Schnittrichtung der Säge. Endseitig der beiden parallelverlaufenden Führungsstangen kann jeweils eine Tragschiene befestigt sein, an welcher eine Führungsschiene befestigbar ist. Die Führungsschiene soll dabei so angeordnet sein, daß sie auf der Oberfläche der Werkstückauflageplatte aufliegt, wenn diese in der oberen Betriebsstellung steht. Die Vorrichtung ist bevorzugt zur Aufnahme einer Handkreissäge geeignet. Es ist aber auch vorgesehen, daß eine Stichsäge, eine Fräse oder dergleichen an der Werkzeugaufnahmeplatte befestigt wird. Eine weitere, besonders bevorzugte Ausgestaltung der Erfindung sieht vor, daß die Aufnahmeplatte mit Führungsklauen auf den als Rundstangen ausgebildeten Führungsschienen aufgeklipst ist. Auch hier ist vorgesehen, daß die Aufnahmeplatte um eine horizontale Achse schwenkbar ist. Die Achse wird bevorzugt von zwei, sich gegenüberliegenden Führungsklauen gebildet, so daß die Schwenkachse parallel zur Drehachse des Kreissägeblattes liegt. Zum Umwenden werden die beiden anderen Führungsklauen von der Führungsstange gelöst und nach Erfolg der Umwendung wieder mit der Führungsstange verklipst. Die Führungsklauen sind hierzu bevorzugt schwenkbar an der Aufnahmeplatte angebracht. Die Führungsklauen können auch Rastmittel aufweisen. Bevorzugt weisen diejeinigen Führungsklauen die Rastmittel auf, welche zum Umwenden gelöst werden können, wobei die Rastmittel in der umgewendeten Stellung (stationärer Kreissägebetrieb) mit korrespondierenden Rastöffnungen der Führungsschienen zusammenwirken. In der umgewendeten Stellung (stationärer Kreissägebetrieb) weisen die lösbaren Führungsklauen vorzugsweise zum benachbarten Ende der Führungsstange, so daß in der Plattensäge-Betriebsstellung eine Verrastung ausgeschlossen ist, da in dieser Stellung nur die rastmittelfreien Führungsklauen in den Bereich der Rastöffnungen kommen. Die Rastmittel werden bevorzugt durch Rastbolzen ausgebildet, welche mittels Druckfedern in den Führungsklauen gelagert werden, so daß die Rastmittel durch eine Verschiebung der Aufnahmeplatte in die Raststellung gebracht werden können. In einer bevorzugten Ausgestaltung der Erfindung weist die Auflageplatte einen zwei Schenkel ausbildenden Winkelanschlag aus, der um eine etwa in seiner Mitte liegende Drehachse schwenkbar ist.
Der Winkelanschlag ist feststellbar. Hierzu ist der Winkelanschlag rückseitig mit einer, einen Bogenschlitz aufweisenden Kulisse versehen, welche mit einem Feststellmittel zusammenwirkt. Der in den Bogenschlitz eingreifende Feststellbolzen kann durch eine Handhabe betätigt werden, welche bevorzugt in einer Versenklage der Auflageplatte einliegt, so daß er ohne aus der Auflageplatte herauszuragen von oben bequem betätigt werden kann. Die Auflageplatte ist zu dem quer zur Verschieberichtung der Aufnahmeplatte verlagerbar und feststellbar. Hierzu sind Haltestangen vorgesehen, welche in randseitige Aussparung des Trägerrahmens einliegen und dort gegen Axialverlagerung befestigt sind. Die Auflageplatte kann auf diesen Haltestangen gleiten und in verschiedenen Stellungen festgelegt werden. Die Auflageplatte kann gegenüber der Aufnahmeplatte in eine definierte Abstandsstellung gebracht werden. Es ist bevorzugt eine Einstellehre vorgesehen, welche mindestens eine Einstellöffnung aufweist, deren Tiefe zur Abstandsstellung korrespondiert derart, daß sie geringfügig größer ist, so daß der untere Rand des Sägeblattes bei richtiger Einstellung in eine nutförmige Sägespur der Auflageplatte eintauchen kann, ohne den Nutgrund zu berühren. Es sind bevorzugt weitere Einstellöffnungen vorgesehen für verschiedene Winkelstellungen des Sägeblattes. Zum Ausgleich der Versenklage des unteren Sägeblattbereiches kann die Auflageplatte, wie oben erwähnt, quer verlagert werden. Die Einstellung der Ausraghöhe des Sägeblattes mittels der Einstellehre erfolgt bevorzugt in einer dem stationären Kreissägebetrieb zugeordneten Schwenkstellung der Aufnahmeplatte. Durch ledigliches einseitiges Anheben der Aufnahmeplatte mit montierter Kreissäge kann dann die gesamte Vorrichtung in die Plattensäge-Betriebsstellung gebracht werden.

Nachfolgend werden Ausführungsbeispiele der Erfindung anhand beigefügter Zeichnungen erläutert.

Es zeigen
- Fig. 1: eine erfindungsgemäße Vorrichtung in Seitenansicht in einer ersten Betriebs stellung,
- Fig. 2: eine Darstellung einer Vorrichtung gemäß Fig. 1 in der Draufsicht,
- Fig. 3: eine Darstellung gemäß Fig. 1 in der zweiten Betriebsstellung,
- Fig. 4: eine Darstellung gemäß Fig. 3 in der Draufsicht,
- Fig. 5: ein Schnitt gemäß der Linie V-V in Fig. 2,
- Fig. 6: ein Schnitt gemäß der Linie VI-VI in Fig. 4,
- Fig. 7: ein Ausführungsbeispiel in der zweiten Betriebsstellung mit Führungsschiene,
- Fig. 8: ein Ausführungsbeispiel gemäß Fig. 7 in der Draufsicht,
- Fig. 9: ein zweites Ausführungsbeispiel der Erfindung in der Kreissäge-Betriebsstellung,
- Fig. 10: eine Darstellung gemäß Fig. 9 in der Plattensäge-Betriebsstellung,
- Fig. 11: eine Draufsicht auf die Vorrichtung gemäß Fig. 9,
- Fig. 12: einen Schnitt gemäß der Linie XII-XII in Fig. 11,
- Fig. 13: einen Schnitt gemäß der Linie XIII-XIII in Fig. 11, strichpunktiert in hochgeklappter Stellung,
- Fig. 14: einen Schnitt gemäß der Linie XIV-XIV in Fig. 13,
- Fig. 15: einen Schnitt gemäß der Linie XV-XV in Fig. 13 und
- Fig. 16: eine Einstellehre aufgesetzt auf die Aufnahmeplatte.

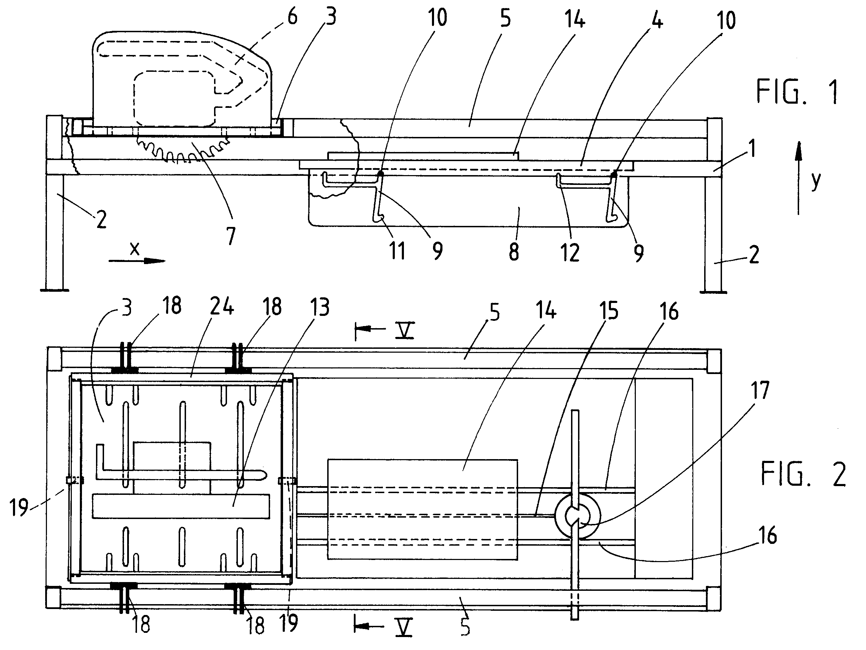

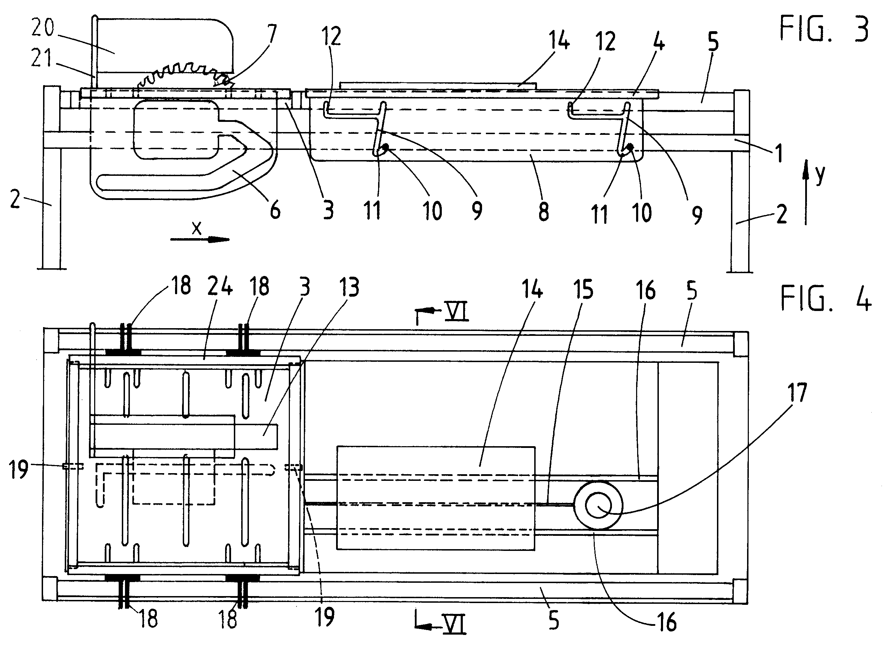

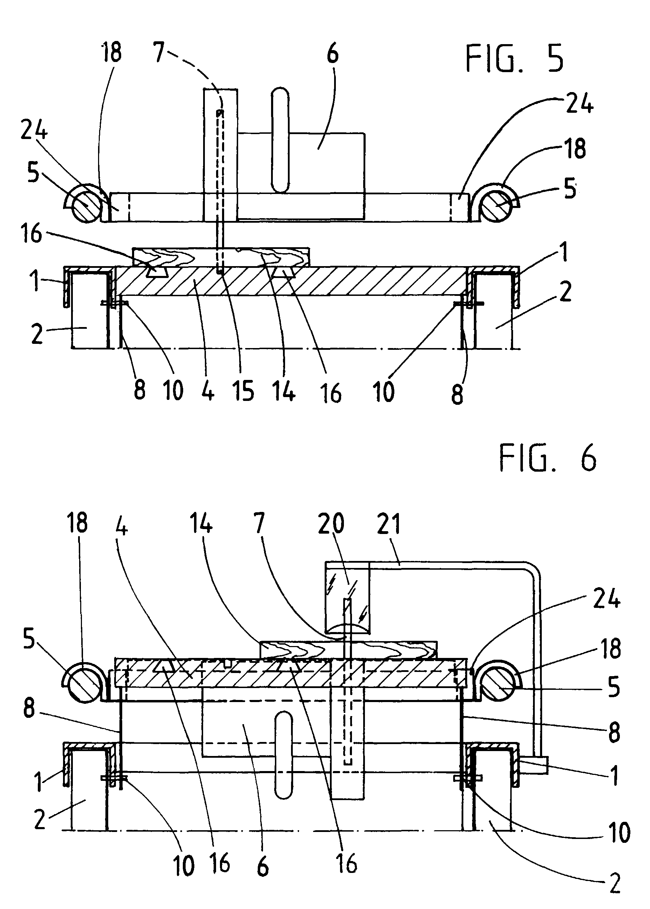

Bei dem in den Figuren dargestellten Ausführungsbeispiel handelt es sich um eine Schlittensäge, welche auch als stationäre Kreissäge verwendet werden kann. In der in den Figuren 1 und 2 dargestellten Betriebsstellung fungiert die Vorrichtung als Schlittensäge. In der in den Figuren 3 und 4 dargestellten Betriebsstellung fungiert die Vorrichtung als stationärer Sägetisch mit vergrößertem Werkstückauflagetisch.

Die Vorrichtung weist einen Rahmen 1 auf, welcher rechteckig gestaltet ist. Aus dem Rahmen 1 ragen an den Ecken Füße 2. Die Füße 2 können aus L-förmig profilierten Stahlwinkeln bestehen. Der Rahmen 1 kann aus U-förmig profilierten Stahlwinkeln bestehen.

Parallel und oberhalb des Rahmens 1 verlaufen Führungsschienen 5, welche einen kreisförmigen Querschnitt haben und bevorzugt als Rohre ausgebildet sind. Die Schienen 5 erstrecken sich entlang den Längsseiten des rechteckförmigen Rahmens 1.

Zwischen den beiden Schienen 5 ist eine im wesentlichen rechteckförmige Werkzeugaufnahmeplatte 3 angeordnet.
Die Werkzeugaufnahmeplatte 3 wird in einem Rahmen 24 gehalten, welcher mittels Gleitern 18 an den Führungsschienen 5 befestigt ist derart, daß die Platte 3 in Pfeilrichtung X auf den Schienen verlagerbar ist. Es sind ferner nicht dargestellte Befestigungsmittel vorgesehen, welche es ermöglichen, daß die Platte 3 in der in den Figuren 3 und 4 dargestellten Betriebsstellung fixiert werden kann. Die Platte 3 kann aus einem Stahlblech gefertigt sein.

Am Rechteckrahmen 24 sind Achsstummel 19 vorgesehen, welche etwa in der Mitte zwischen den beiden Führungsschienen 5 angeordnet sind. Um diese Achsstummel 19 kann die Platte 3 geschwenkt werden. Auf der Platte 3 kann einseitig ein motorbetriebenes Elektrowekzeug 6, beispielsweise eine Kreissäge mit Sägeblatt 7 befestigt werden. Das Sägeblatt 7 ragt dann in den Zwischenraum zwischen den Führungsschienen 5 und der Werkstückauflageplatte 4, welche unterhalb der Führungsschienen 5 angeordnet ist. Auf der Werkstückauflageplatte 4 ist im Ausführungsbeispiel eine Holzplatte 14 als Werkstück dargestellt. Am Rahmen sind Befestigungsmittel vorgesehen, mit welche die Werkstückauflageplatte 4 am Rahmen befestigt werden kann derart, daß die Auflageplatte 4 in Pfeilrichtung Y verlagert werden kann und in Verlagerungsstellungen fixiert ist. In Figur 1 und 2 ist die Auflageplatte 4 in einer ersten Verlagerungsstellung gezeichnet. In den Figuren 3 und 4 ist die Auflageplatte 4 in einer zweiten Verlagerungsstellung dargestellt.
Die Befestigungsmittel sind im Ausführugsbeispiel als Zapfen 10 ausgebildet, welche vom U-förmigen Rahmen einwärts ragen und jeweils in Schlitze 9 einer seitlich an der Auflageplatte 4 angebrachten Wange 8 eintreten.
Die Schlitze 9 sind so angeordnet, daß die Auflageplatte 4 in den besagten zwei Funktionsstellungen verrasten kann. Hierzu sind nach oben auslaufende Schlitzenden 11 vorgesehen. Ferner kann noch ein Schlitzende 12 vorgesehen sein, welches ermöglicht, daß die Platte 4 in der ersten Betriebsstellung (Fig. 1) um einen gewissen Betrag in Richtung des Pfeiles X verlagert werden kann.

Die Platte 4 weist in Verlagerungsrichtung der Platte 3 verlaufende Befestigungsnuten 16 auf, welcher die Querschnittsform eines Schwalbenschwanzes aufweisen. Ferner weist die Platte 4 einen Winkelanschlag 17 auf. Der Winkelanschlag ist um eine Achse schwenkbar, welche in Flucht liegt zur Schnittlinie des Sägeblattes 7.

In der Betriebsstellung gemäß Figur 1 und 2 ist die Oberfläche der Platte 4 unterhalb der Schienen 5 angeordnet, so daß Werkstücke 14 unterhalb der Schiene den Rahmen überragen können. In der Betriebsstellung gemäß Figur 3 und 4 ist die Oberfläche der Platte 4 oberhalb der Schiene 5 angeordnet. Auch hier können Werkstücke 14 breiter sein als der Abstand der beiden Schienen 5.

Die Funktionsweise der Vorrichtung ist die folgende:

In der in den Figuren 2 und 5 dargestellten Betriebsstellung liegt die Platte 4 unterhalb der Werkzeugaufnahmeplatte 3, so daß sich zwischen den Platten ein Höhenfreiraum ausbildet, der der Stärke der maximal zu schneidenden Platte entspricht und der geringer ist als die maximale Eintauchtiefe des Sägeblattes 7. In der Betriebsstellung gemäß Figur 1 und 2 wird das Werkstück 14 fest auf die Werkstückauflageplatte 4 aufgelegt, beispielsweise durch nicht dargestellte Spannmittel aufgespannt, sodann wird die Platte 3 in Richtung entgegen des Pfeiles X verlagert, so daß die Säge 7 das Werkstück 14 schneidet. Das Sägeblatt 7 sägt dabei wie ins besondere aus Figur 5 hervorgeht bis in die Auflageplatte 4 hinein, so daß sich eine Spur 15 ergibt, anhand welcher sich das Werkstück ausrichten läßt, da die Spur 15 der späteren Schnittlinie bei Verlagerung der Platte 3 entspricht.

In der Betriebsstellung gemäß den Figuren 3, 4 und 6 ist die Oberfläche der Platte 4 fluchtend zur Oberfläche der Platte 3 angeordnet. Die Platte 3 liegt demzufolge neben der Platte 4 und ist ortsfest fixiert. In dieser Betriebsstellung überdeckt eine an einem Arm 21 befestigte Schutzkappe 20 das Sägeblatt, welcher Arm 21 am Rahmen 1 befestigt ist.

In dieser Betriebsstellung kann das Werkstück 14 über die Oberfläche der Werkstückauflageplatte 4 hin auf die Oberfläche der Werkzeugaufnahmeplatte 3 verschoben werden, um dann von dem ortsfest drehangetriebenen Kreissägeblatt 7 zerschnitten zu werden.

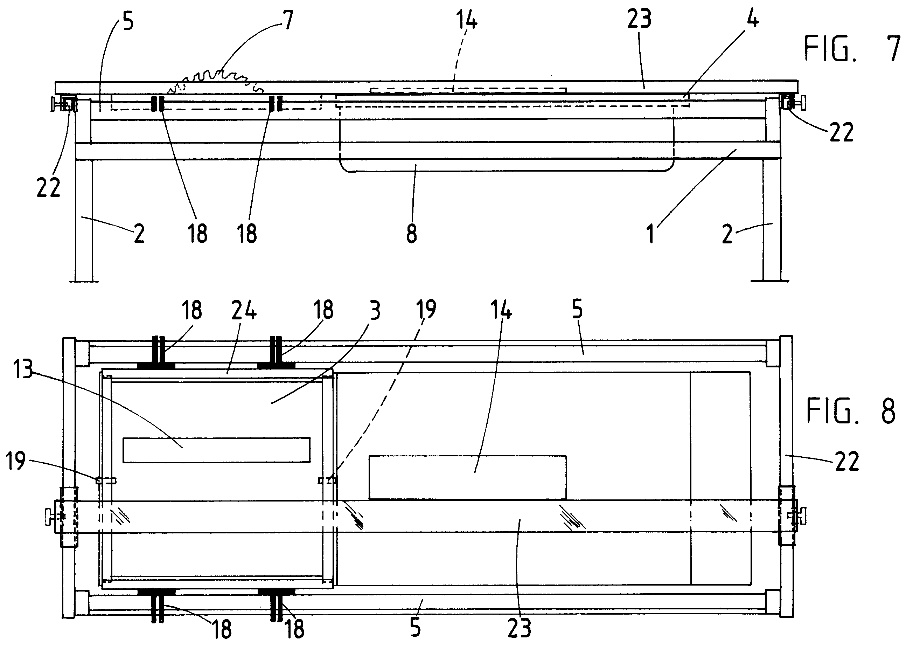

Zur Verbesserung der Führung des Werkstückes beim Betrieb gemäß den Figuren 3 und 4 ist, wie sich aus den Figuren 7 und 8 ergibt, eine Führungsschiene 23 vorgesehen, welche in Parallelrichtung zur Schnittlinie sich erstreckt. Die Führungsschiene 23 ist an Tragschienen 22 befestigt, so daß sie parallel zur Schnittlinie einstellbar ist. Die beiden Tragschienen 22 sind im Bereich der jeweiligen Enden der Führungsschienen 5 angeordnet.

Bevorzugt liegen die Platten 3, 4 in der Horizontalen.
Es ist aber auch vorgesehen, daß die Platten in der Vertikalen oder in einer Neigungslage liegen. Die Werkstückauflageplatte 4 besteht bevorzugt aus Holz, während die Werkzeugaufnahmeplatte 3 aus Blech besteht und entsprechende Öffnungen aufweist, in welche Schrauben oder dergleichen eingreifen können, um eine Handkreissäge oder dergleichen auf der Rückseite der Platte 3 zu befestigen.

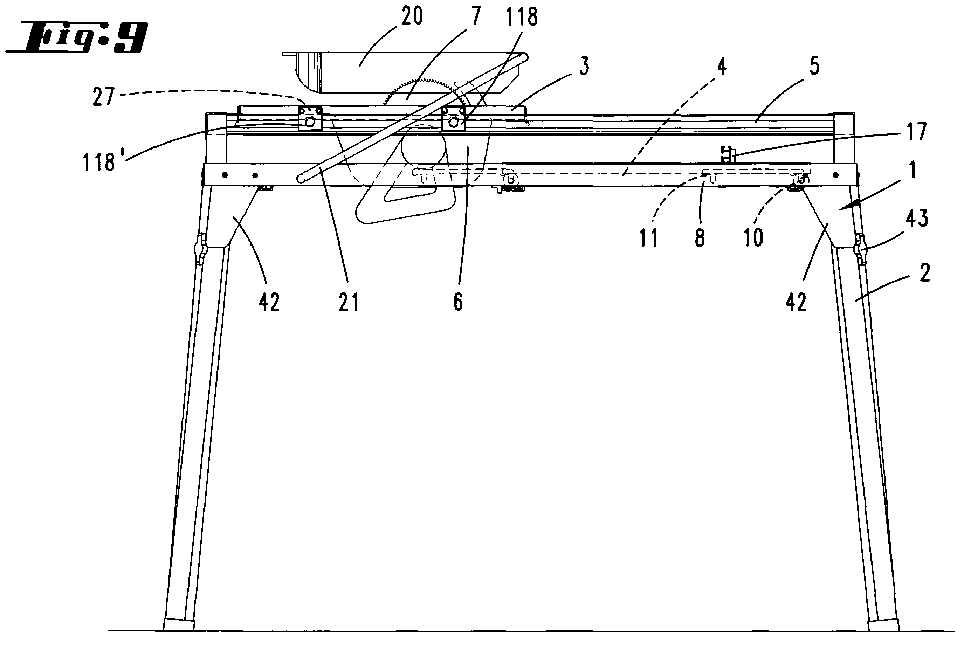

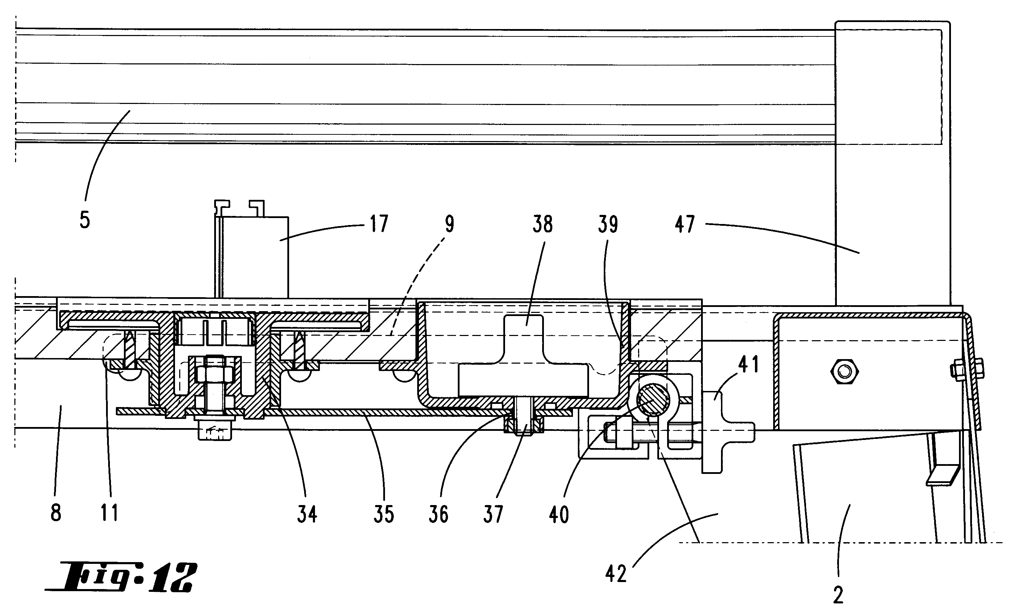

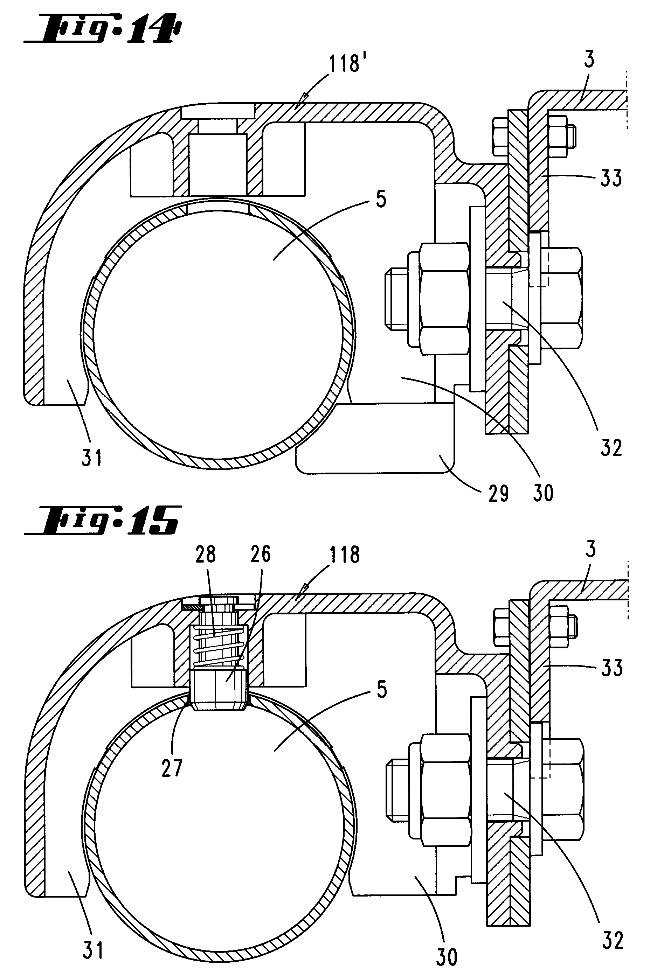

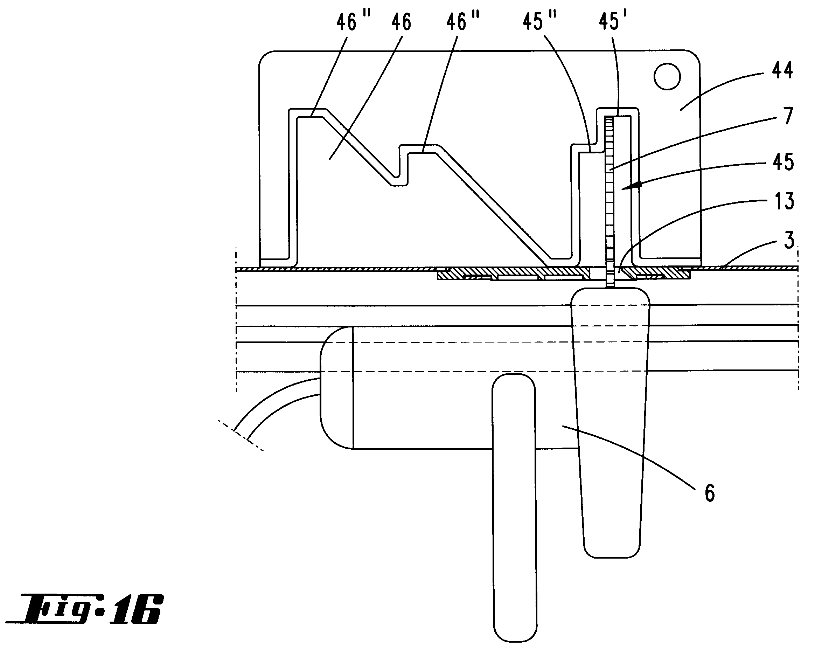

Bei dem in den Figuren 9 bis 16 beschriebenen zweiten Ausführungsbeispiel der Erfindung sind gleiche oder gleichwirkende Teile mit gleichen Bezugsziffern versehen. Die Vorrichtung weist einen Rahmen 1 auf, welcher aus Winkel-Metallprofilen besteht. Der Rahmen weist vier vertikal schrägverlaufende Beine auf, welche mittels Befestigungsschrauben 34 an Beinansatzwinkel 42 befestigt sind. Die Beine 2 können durch Lösen der Befestigungsschraube 43 von dem Beinansatzwinkel gelöst werden, so daß der Rahmen 1 nicht nur auf den Boden, sondern auch auf einen Tisch aufsetzbar ist.

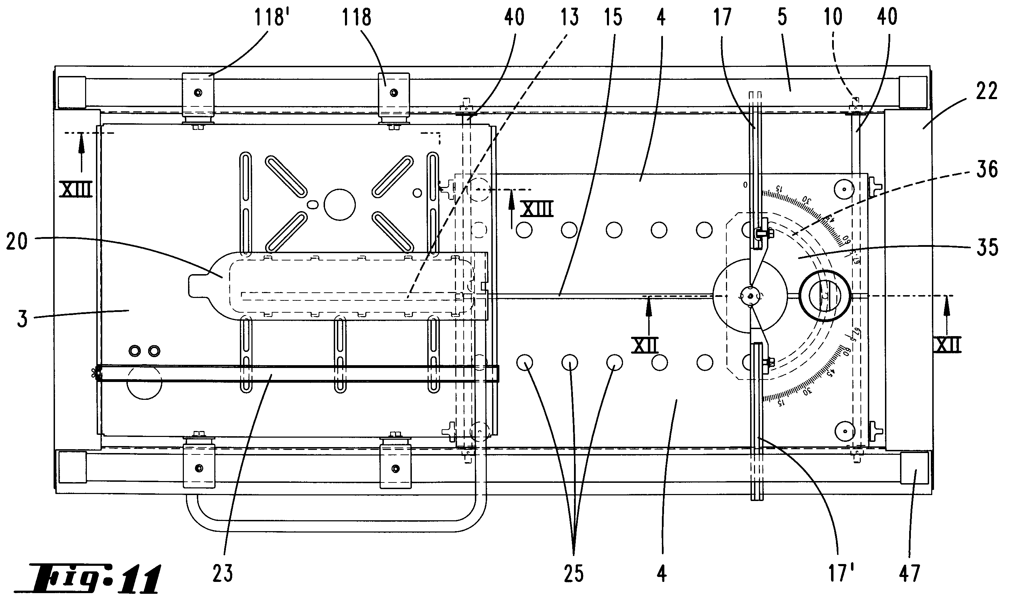

In der Draufsicht (Fig. 11) hat der Rahmen eine rechteckförmige Gestalt. Parallel zu seinen Längsseiten sind in vertikaler Abstandslage rundstabförmige Führungsschienen 5 angeordent. Der Rahmen selbst kann U-profilförmige Quer- und Längsseiten haben. Die Querseiten 8 weisen Längsschlitze 9 auf, welche zwei Rastvertiefungen 11 aufweisen, in welche Zapfen 10 einrasten können. Die Zapfen 10 werden von den Enden der sich von einer Längsseite zur anderen erstreckenden Haltestangen 40 ausgebildet. An diesen Haltestangen 40, von denen insgesamt zwei vorgesehen sind, ist eine Werkstück-Auflageplatte 4 querverschieblich geführt und befestigbar.
Hierzu sind Befestigungsmittel 41 vorgesehen, beispielsweise in Form von Klemmschrauben. Die Auflageplatte 4 kann in verschiedenen vertikalen Raststellungen liegen, wozu Rastschlitze 11 mit unterschiedlicher Tiefe vorgesehen sind.

Endseitig den Querseiten des Rahmens 1 sind vertikale Fortsätze 47 angeordnet, welche endseitige Träger der Führungsschienen 5 sind.

Auf den beiden beabstandet und parallel zueinander verlaufenden Führungsschienen 5 ist eine Aufnahmeplatte 3 für das Werkzeug längsverschieblich oberhalb der Auflageplatte 4 vorgesehen Die Aufnahmeplatte 3 weist eine Werkzeugaufnähme auf, mittels welcher das Motorgehäuse einer Handkreissäge 6 einseitig auf der Aufnahmeplatte 3 befestigbar ist, derart, daß das Sägeblatt 7 der Handkreissäge durch einen Durchtrittschlitz 13 der Aufnahmeplatte 3 auf die gegenüberliegende Seite der Aufnahmeplatte 3 ragt.

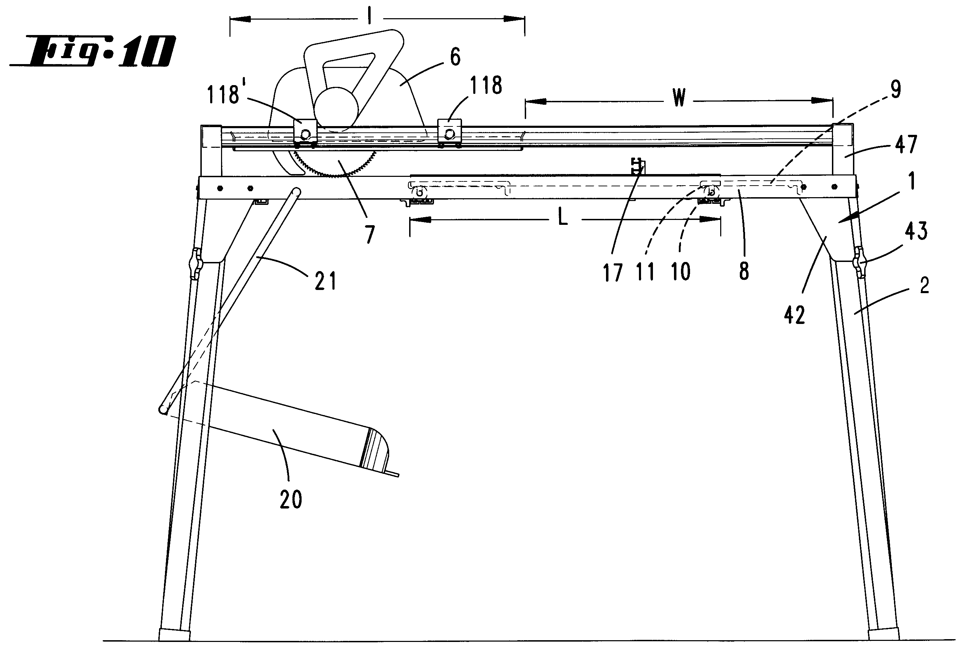

In der in Fig. 10 dargestellten Plattensäge-Betriebsstellung können die als Klauen 118, 118' ausgebildeten Gleiter auf den Führungsschienen 5 gleiten, so daß die Aufnahmeplatte 3 bzw. das Sägeblatt 7 oberhalb der Auflageplatte 4 verlagerbar ist. Die Verlagerungerfolgt in Schnittrichtung des Sägeblattes 7. Das Sägeblatt 7 ragt dabei geringfügig tiefer aus der Aufnahmeplatte 3 nach unten aus als der Abstand zwischen Aufnahmeplatte 3 und Oberfläche der Auflageplatte 4. Die Auflageplatte 4 weist eine in Schnittrichtung verlaufende Nut 15 auf, in welche der am weitesten ausragende Bereich des Sägeblattes 7 eintauchen kann, so daß ein auf der Werkstückauflage 4 aufliegendes Werkstück vollständig durchtrennt werden kann.

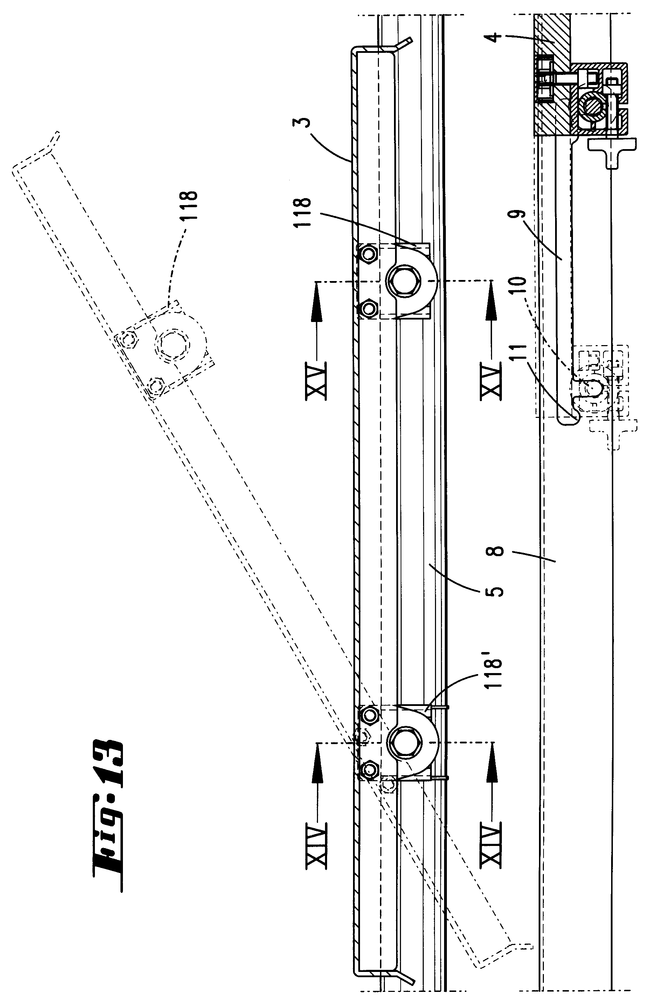

Um von der in Fig. 10 dargestellten Plattensägen-Betriebsstellung in die in Fig. 9 dargestellte stationäre Kreissägen-Betriebsstellung zu gelangen, können die lediglich auf die Schienen 5 aufgeklipsten Führungsklauen 118 gelöst werden (vergl. Fig. 13) und unter Vollführung einer 180°-Stellung wieder auf die Füngsschiene 5 aufgeklipst werden. Zumindest eine der lösbaren Führungsklauen 118 weist einen Rastbolzen 26 auf, welcher mittels einer Druckfeder 28 federbeaufschlagt in eine Vortrittsstellung gedrückt ist. Wird die entsprechende Führungsklaue auf die Führungsschiene 5 aufgeklipst, so kann der Rastbolzen 26 unter Komprimierung der Feder zurückgedrückt werden. Die Führungsschiene 5 weist im Endbereich eine Rastausnehmung 27 auf. Durch Verschiebung der Aufnahmeplatte wird die Führungsklaue 118 derart verlagert, daß der Rastbolzen in die Rastaussparung 27 eintritt.

Die Führungsklauen 118, 118' bestehen bevorzugt aus Kunststoff. Dabei ist der Führungsklaue 118', welche zum Schwenken nicht gelöst werden muß, ein Fortsatz 29 angeformt. Diese Haltefortsatz 29 dient dazu, die Halteklaue 118' formschlüssig an der Führungsschiene 5 zu halten.

Die Länge des Rahmens ist etwa um die Länge der Aufnahmeplatte 3 länger als die Länge der Auflageplatte, so daß die Aufnahmeplatte 3 in eine Linearverschiebestellung gebracht werden kann, wo sie die Auflageplatte nicht, oder zumindest nur teilweise überlappt, so daß in der Verschwenkstellung (Fig. 9) das Motorgehäuse neben der Auflageplatte 4 liegt. Das Motorgehäuse durchragt dabei die gedachte Verlängerung der Oberflächenebene der Auflageplatte 4.

Am Rahmen 1 ist ein Haltearm 21 vorgesehen, an dessen Ende ein Handschutz 20 angebracht ist, welcher in der Kreissägen-Betriebsstellung (Fig. 9) in eine Stellung oberhalb des Sägeblattes gebracht werden kann. In einer Stellung gemäß Fig. 10 kann der Handschutz 20 weggeklappt werden.

Auf der Auflageplatte 4 sind eine Vielzahl von Öffnungen 25 vorgesehen, in welche nicht dargestellte Haltemittel eingebracht werden können, um das Werkstück festzuhalten Auf der Auflageplatte 4 ist ferner einen aus zwei Schenkeln 17, 17' bestehender Winkelanschlag vorgesehen, der um ein zentrales Schwenklager 34 schwenkbar ist. Das Schwenklager 34 weist unterhalb der Auflageplatte 4 eine Kulisse 35 auf, mit einem Bogenschlitz 36, in welchen ein Sperrbolzen 37 eintaucht, welcher mit einer Drehhandhabe 38 funktionsverbunden ist, mittels welcher die Kulisse 35 und damit der Winkelanschlag in verschiedenen Winkelstellungen festlegbar ist. Die Drehhandhabe 38 ist dort in einem in einer Aussparung der Auflageplatte 4 eingelassenen Topf 39 untergebracht, so daß ohne hervorragende Bedienteile eine Festlegung des Winkelanschlages von oben möglich ist.

Es ergibt sich folgende Wirkungsweise:

Soll ein Werkstück in der Plattensägen-Betriebsart zersägt werden, so wird die Handkreissäge 6 gemäß Fig. 10 auf der Auflageplatte 3 befestigt und dann in eine Stellung gebracht, in welcher das Sägeblatt oberhalb aber neben der Auflageplatte 4 liegt (vergl. Fig. 10). Die Auflageplatte 4 kann dabei in eine mittlere Stellung zum Rahmen 1 gebracht werden, so daß jeweils zwischen ihren Schmalseiten und den Rahmenquerseiten Abstände liegen, welche groß genug sind, daß die Schnittlänge des Sägeblattes 7 größer ist als die Längserstreckung der Auflageplatte. Sodann wird ein nicht dargestelltes Werkstück mittels nicht dargestellter Klemdmittel auf der Auflageplatte 4 befestigt. Sodann wird die Säge 6 in Betrieb genommen und in Schnittrichtung (in Fig. 10 nach rechts) verlagert bis über die gesamte Auflageplatte 4 hinaus.

Zum Umwenden der Säge in die stationäre Betriebsrat wird die Aufnahmeplatte in die Teilüberlappungsstellung gemäß Fig. 10 gebracht. Die Auflageplatte 4 wird ebenfalls linear verlagert, so daß der Raum unter dem Sägeblatt bzw. dem Motorgehäuse frei ist. Sodann werden die Fürungsklauen 118 gelöst. Unter gleichzeitigem Verschieben der Fürungsklauen 118' auf der Führungsschiene 5 wird die Aufnahmeplatte 3 um 180 ° geschwenkt, bis die Führungsklauen 118 wieder auf die Führungsschiene 5 aufgeklipst werden. Die in den Führungsklauen 118 angeordneten Rastmittel verrasten dann mit der Führungsschiene.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieseer Unterlagen in Ansprüche vorliegender Anmeldung mit aufzunehmen.

## Patentansprüche

1. Vorrichtung zur Aufnahme eines motorgetriebenen Werkzeuges (6), insbesondere einer elektrisch angetriebenen Säge, beispielsweise Kreissäge, mit einer einseitig eine Werkzeugaufnahme für das Werkzeug aufweisenden Aufnahmeplatte (3) und einer Auflageplatte (4) für das Werkstück, wobei die Aufnahmeplatte (3) mit der weg von der Auflageplatte weisenden Werkzeugaufnahme in einer Ebene beabstandet, parallel und oberhalb zur Auflagenebene mittels Gleitern (18,118,118') an Führungsschienen (5) linearverschieblich geführt ist und um eine in der Verschiebebene liegenden Schwenkachse um 180° umwendbar ist, dadurch gekennzeichnet, daß der Verschiebeweg (W), die Länge (1) der Aufnahmeplatte (3) und die Länge (L) der Auflageplatte (4) derart aufeinander abgestimmt sind, daß die Aufnahmeplatte durch eine Linearverlagerung zumindest teilweise aus der Überlappungslage zur Auflageplatte (4) bringbar ist und daß sie dort mit montiertem Werkzeug (6) umwendbar und umgewendet feststellbar ist, wobei das Motorgehäuse (6) in Nebeneinanderlage zur Auflageplatte (4) liegt.

2. Vorrichtung nach Anspruch 1 oder insbesondere danach, gekennzeichnet durch eine in der Verlagerungsrichtung der Aufnahmeplatte (3) liegende Schwenkachse (19).

3. Vorrichtung nach einem oder mehreren der vorhergenden Ansprüche oder insbesondere danach, gekennzeichnet durch zwei Führungsstangen (5), zwischen welchen die Aufnahmeplatte (3) und die Auflageplatte (4) angeordnet sind.

4. Vorrichtung nach einem oder mehreren der vorhergehenden Ansprüche oder insbesondere danach, dadurch gekennzeichnet, daß die Werkstückauflageplatte (4) in der ersten Stellung unter Ausbildung eines Höhenfreiraumes unter den Führungsschienen (5) liegt und in der zweiten Stellung oberhalb der Führungsschienen (5) liegt.

5. Vorrichtung nach einem oder mehreren der vorhergehenden Ansprüche oder insbesondere danach, dadurch gekennzeichnet, daß die Vorrichtung einen auf vier Beinen (2) stehenden Rahmen (1) aufweist, zur Aufnahme der in Horizontallage angeordneten Platten (3) und (4).

6. Vorrichtung nach einem oder mehreren der vorhergenden Ansprüche oder insbesondere danach, dadurch gekennzeichnet, daß die Werkstückauflageplatte (4) seitliche Wangen (8) aufweist, welche mit Höhenverstellgliedern (9, 10, 11) am Rahmen (1) befestigt sind.

7. Vorrichtung nach einem oder mehreren der vorhergenden Ansprüche oder insbesondere danach, dadurch gekennzeichnet, daß die Wangen (8) Schlitze (9, 11) aufweisen, die mit am Rahmen angeordneten Zapfen (10) zussammenwirken.

8. Vorrichtung nach einem oder mehreren der vorhergehenden Ansprüche oder insbesondere danach, dadurch gekennzeichnet, daß die Werkstückauflageplatte (4) Befestigungsschlitze (16), Nuten oder Öffnungen (25) für Werkstückklemmen oder dergleichen aufweist.

9. Vorrichtung nach einem oder mehreren der vorhergenden Ansprüche oder insbesondere danach, gekennzeichnet durch einen insbesondere in Flucht zum Werkzeug liegenden, auf der Werkstückauflageplatte (4) angeordneten Winkelanschlag (17).

10. Vorrichtung nach einem oder mehreren der vorhergehenden Ansprüche oder insbesondere danach, gekennzeichnet durch endseitig der Führungsschiene angeordnete Tragschienen (22) zur Befestigung einer Werkstückführungsschiene (23).

11. Vorrichtung nach einem oder mehreren der vorhergehenden Ansprüche oder insbesondere danach, gekennzeichnet durch eine Linearführung der Aufnahmeplatte (3) in der Plattenebene und durch eine quer zur Verlagerungsrichtung der Aufnahmeplatte (3) aus einer von der Aufnahmeplatte (3) überfahrbar ersten Stellung in eine zur Aufnahmeplatte (3) fluchtenden zweiten Stellung verlagerbaren Werkstückauflageplatte (4).

12. Vorrichtung nach einem oder mehreren der vorhergehenden Ansprüche oder insbesondere danach, dadurch gekennzeichnet, daß die Aufnahmeplatte (3) mit Führungsklauen (118, 118') auf den als Rundstangen ausgebildeten Führungsschienen (5) aufgeklipst ist.

13. Vorrichtung nach einem oder mehreren der vorhergehenden Ansprüche oder insbesondere danach, dadurch gekennzeichnet, daß die Aufnahmeplatte (3) um eine von zwei sich gegenüberliegenden Führungsklauen (118') gebildete Schwenkachse umwendbar ist, wozu die beiden anderen Führungsklauen (118) von der Führungsstange (5) lösbar sind.

14. Vorrichtung nach einem oder mehreren der vorhergehenden Ansprüche oder insbesondere danach, daß die lösbaren Führungsklauen (118) Rastmittel aufweisen, um in der umgewendeten Stellung mit der Führungsschiene zu verrasten.

15. Vorrichtung nach einem oder mehreren der vorhergehenden Ansprüche oder insbesondere danach, dadurch gekennzeichnet, daß die Rastmittel federbeaufschlagte Rastbolzen (26) sind, welche mit im Endbereich der Führungsschienen (5) angeordneten Rastaussparungen (27) verrasten.

16. Vorrichtung nach einem oder mehreren der vorhergehenden Ansprüche oder insbesondere danach, dadurch gekennzeichnet, daß die Fühungsklauen schwenkbar über einen Schwenkbolzen (23) mit der Aufnahmeplatte (3) verbunden sind.

17. Vorrichtung nach einem oder mehreren der vorhergehenden Ansprüche oder insbesondere danach, dadurch gekennzeichnet, daß die Führungsklauen (118, 118') aus Kunststoff bestehen und elastisch ausbiegbare Klauenschenkel (30, 31) aufweisen.

18. Vorrichtung nach einem oder mehreren der vorhergehenden Ansprüche oder insbesondere danach, dadurch gekennzeichnet, daß der Winkelanschlag (17, 17') über eine Kulissenanordnung (35, 37) einstell- und feststellbar ist.

19. Vorrichtung nach einem oder mehreren der vorhergehenden Ansprüche oder insbesondere danach, dadurch gekennzeichnet, daß zum Ein- und Feststellen ein in einer Versenklage der Auflageplatte (4) angeordnete Drehhandhabe (38) vorgesehen ist.

20. Vorrichtung nach einem oder mehreren der vorhergehenden Ansprüche oder insbesondere danach, gekennzeichnet durch eine Einstellehre mit Einstellöffnungen, deren Tiefe zum Abstand von Aufnahmeplatte (3) zu Auflageplatte (4) entspricht.

21. Vorrichtung nach einem oder mehreren der vorhergehenden Ansprüche oder insbesondere danach, dadurch gekennzeichnet, daß der Verschiebweg (W) der Aufnahmeplatte (3) in etwa der Länge (L) der Auflageplatte (4) entspricht.
